# EUROPÄISCHE PATENTSCHRIFT

(11) **EP 1 177 114 B1**
(45) Veröffentlichungstag und Bekanntmachung des Hinweises auf die Patenterteilung: **12.11.2003**
(21) Anmeldenummer: 00922316.5
(22) Anmeldetag: 28.04.2000
(51) Int. Cl.: B60K 31/04, B60K 41/14, B60K 26/02, A01B 69/00

(54) **VORRICHTUNG UND VERFAHREN ZUM VERÄNDERN DER IST-GESCHWINDIGKEIT EINES ARBEITSFAHRZEUGES MIT STUFENLOSGETRIEBE UND TEMPOMATFUNKTION**
DEVICE AND METHOD FOR CHANGING THE REAL SPEED OF A WORK VEHICLE WITH A CONTINUOUSLY VARIABLE TRANSMISSION AND CRUISE CONTROL FUNCTION
DISPOSITIF ET PROCEDE DE MODIFICATION DE LA VITESSE REELLE D'UN VEHICULE DE TRAVAIL A TRANSMISSION A VARIATION CONTINUE ET A FONCTION DE REGULATION AUTOMATIQUE DE VITESSE

(30) Priorität: 28.04.1999 AT 29199 U
(43) Veröffentlichungstag der Anmeldung: 06.02.2002
(73) Patentinhaber: CNH Österreich GmbH, 4300 St. Valentin (AT)
(72) Erfinder: HRAZDERA, Oliver, A-4470 Enns (AT); KUBIN, Helmut, A-4400 Steyr (AT); HOCHAUER, Hans, A-3240 Mank (AT)
(74) Vertreter: Feldkamp, Rainer, Dipl.-Ing.
(86) Internationale Anmeldenummer: AT0000110
(87) Internationale Veröffentlichungsnummer: WO00066386

(56) Entgegenhaltungen:
- EP-A- 0 305 156
- EP-A- 0 424 088
- EP-A- 0 875 698
- EP-A- 0 967 107
- EP-A- 0 999 086
- WO-A-98/50246
- DE-A- 3 407 440
- DE-A- 3 901 649
- DE-A- 4 338 098
- DE-C- 19 646 104
- US-A- 5 315 900
- US-A- 5 519 256
- PATENT ABSTRACTS OF JAPAN vol. 011, no. 281 (M-624), 11. September 1987 (1987-09-11) & JP 62 080131 A (TOUYOUSHIYA:KK), 13. April 1987 (1987-04-13)
- VDO Querschnitt 2: "Tempostat E"; VDO Adolf Schindling AG, Schwalbach (DE), 05.1979, Seiten 1-17

## Beschreibung

Die Erfindung bezieht sich auf ein System und ein Verfahren zum Verändern der Ist-Geschwindigkeit eines Arbeitsfahrzeuges mit Stufenlosgetriebe und elektronischem Steuergerät mit Geschwindigkeitsregelfunktion der im Oberbegriff des Anspruchs 1 bzw. 6 genannten Art.

Ein Motorfahrzeug mit einem System der eingangs genannten Art ist aus der nicht vor veröffentlichten EP-A1-0 967 107 bekannt, die einen Stand der Technik nach Artikel 54(3) und (4) EPÜ bildet. Hierbei wird das Getriebeuntersetzungsverhältnis in Abhängigkeit von der Motorbelastung und einer gewünschten Fahrgeschwindigkeit gesteuert, so daß diese Fahrgeschwindigkeit möglichst eingehalten wird.

Ein system für Motorfahrzeuge allgemein, ansonsten jedoch entsprechend dem Ober begriff des Anspruchs 1 bzw. 6, ist aus der EP-A2-0 305 156 bekannt.

Der allgemeine Aufbau und die Funktionsweise eines Beispiels eines Geschwindigkeitsreglers ist weiterhin der Veröffentlichung "VDO Querschnitt 2", Mai 1979 der Firma VDO Adolf Schindling AG, Schwalbach, entnehmbar.

Das Arbeitsfahrzeug kann ein Baufahrzeug, ein landwirtschaftliches oder kommunales Fahrzeug sein, das Stufenlosgetriebe von irgendeiner Bauart. Ein derartiges Stufenlosgetriebe ist für Arbeitsfahrzeuge beispielsweise in Form eines Leistungsverzweigungsgetriebe mit einer Steuerung gemäßder EP-A1-0967 107 bekannt.

Bei Stufenlosgetrieben für Arbeitsfahrzeuge ist eine Geschwindigkeitsregelfunktion nötig, um während lange andauernder Arbeitsfahrten (z. B. Kehren, Pflügen, Mähen) die optimale Geschwindigkeit genau einhalten zu können. Dabei ist es in gewissen Situationen erforderlich, vorübergehend mit einer abweichenden (meist kleineren) Geschwindigkeit zu fahren und dann wieder mit der optimalen Geschwindigkeit weiterzufahren. Diese Situationen können sein: Wenden am Feldrain beim Pflügen, wobei enge Kurven zu fahren sind und oft auch mehrmals reversiert werden muß; schnelleres Überwinden kahler Stellen beim Mähen; Bergabfahren im schweren Schleppbetrieb, wobei gegebenenfalls die Ist-Geschwindigkeit verringert werden muß; und schließlich Notstop. Danach muß die optimale Geschwindigkeit automatisch und genau wieder erreicht werden. Es ist wünschenswert, auch die reduzierte Geschwindigkeit reproduzierbar speichern zu können.

Beim Fahren enger Kurven ist es bei Ackerschleppem nötig und üblich, Lenkbremsen zu verwenden. Darunter versteht man auf die Hinterräder wirkende Betriebsbremsanlagen, die bis hin zum Bremspedal geteilt sind, so daß beim Treten eines Halbpedales nur auf der kurveninneren Seite gebremst wird. Naturgemäß ist es nicht möglich, gleichzeitig Bremse und ein weiteres Pedal zur Änderung der Ist-Geschwindigkeit zu treten.

Es ist daher Ziel der Erfindung, ein System bzw. ein Verfahren der eingangs genannten Art so zu gestalten, daß alle oben beschriebenen Betriebsanforderungen erfüllbar sind, wobei die Geschwindigkeitsregelfunktion rein manuell unterbrechbar ist, und eine einfache und sichere Bewältigung besonderer Situationen erleichtert ist

Gemäß einem Grundgedanken der Erfindung wird ein System zum Verändern der Ist-Geschwindigkeit eines Arbeitsfahrzeuges mit Stufenlosgetriebe und elektronischem Steuergerät mit Geschwindigkeitsregelfunktion geschaffen, das folgende Bedienungselemente aufweist:
a) ein Betätigungsorgan zur Verstellung der Ist-Geschwindigkeit des Fahrzeuges, die als erste Ist-Geschwindigkeit laufend gespeichert und von der Geschwindigkeitsregelfunktion gehalten wird, wenn keine Verstellung erfolgt,
b) mindestens einen Schalter zur Außerkraftsetzung und Wiedereinsetzung der Geschwindigkeitsregelfunktion, wobei bei Außerkraftsetzung die eingestellte erste Ist-Geschwindigkeit gespeichert bleibt und bei Wiedereinsetzung wieder eingestellt wird.

Diese Vorrichtung ist dadurch gekennzeichnet, daß ein weiterer Schalter vorgesehen ist, durch dessen Betätigung eine Geschwindigkeit, insbesondere Null entsprechend Stillstand des Fahrzeuges, eingestellt wird, worauf mittels des Betätigungsorganes eine zweite Ist-Geschwindigkeit für die Manövrierfahrt eingestellt wird, die bis zu einem vorgegebenen Maximalwert ansteigt, solange das Betätigungsorgan aktiviert bleibt, daß durch erneutes Betätigen des weiteren Schalters die Geschwindigkeitsregelfunktion für die erste Ist-Geschwindigkeit wieder eingesetzt wird.

Gemäß einer vorteilhaften Ausgestaltung der Erfindung ist vorgesehen, daß ein Schalter vorgesehen ist, nach dessen Betätigung die zweite Ist-Geschwindigkeit mittels des Betätigungsorganes eingestellt und gespeichert werden kann, und daß durch emeutes Betätigen des Schalters die Geschwindigkeitsregelfunktion für die erste Ist-Geschwindigkeit wieder einsetzbar ist, wobei die zuletzt eingestellte zweite Ist-Geschwindigkeit gespeichert wird.

Der mindestens eine Schalter kann ein Schalter sein, nach dessen Betätigung eine zweite Ist-Geschwindigkeit mittels desselben Betätigungsorganes einstellbar ist. Der Schalter bewirkt somit das Außerkraftsetzen der Geschwindigkeitsregelfunktion der ersten Ist-Geschwindigkeit, wobei diese aber gespeichert bleibt und die Verstellung der zweiten Ist-Geschwindigkeit kann mittels desselben Betätigungsorganes erfolgen, mit dem auch die erste Geschwindigkeit eingestellt wird. Das bedeutet eine große Bedienungserleichterung und schließt Fehlbedienungen aus, weil der jeweilige Finger des Fahrers zur Geschwindigkeits-änderung auf derselben gewohnten Stelle bleiben kann. Das ist ein besonderer Vorteil bei Wendemanövem beim Pflügen, wo nebst der Bedienung der Lenkung noch weitere Bedienungsgriffe und die Betätigung der Lenkbremse nötig sind.

Eine ergonomisch besonders gute Anordnung besteht darin, das Betätigungsorgan und den mindestens einen Schalter auf einer Bedienungsoberfläche in Reichweite mindestens eines Fingers des Fahrers anzubringen, wobei in einer bevorzugten Ausführungsform die Bedienungsoberfläche auf einem festen Handgriff in Reichweite des Daumens der den Handgriff haltenden Hand angebracht ist. Die Kombination von Handgriff und Bedienungsoberfläche bietet den Vorteil, daß die Bedienung des Fahrzeuges durch dessen Erschütterungen nicht beeinträchtigt ist. Damit wird ungewolltes oder schlecht dosiertes Verstellen der Geschwindigkeit bei Erschütterungen des Fahrzeuges verhindert, weil zur Bedienung die Relativbewegung zwischen dem Finger und seiner abgestützten Hand genügt.

In einer besonders bevorzugten Ausführungsform besteht das Betätigungsorgan aus zwei Tastem, einer zum Erhöhen und einer zum Vermindern der Ist-Geschwindigkeit. In Verbindung mit der elektronischen Steuerung ist es besonders sicher und sinnfällig, nur durch die Zeitdauer, während der der eine oder andere Taster niedergedrückt wird, die Geschwindigkeit einzustellen. Die Verstellgeschwindigkeit der Stellglieder im Antriebsstrang (bestehend aus Antriebsmotor und Stufenlosgetriebe) bestimmt dann die Änderungsgeschwindigkeit der Fahrgeschwindigkeit. Ein Auseinanderklaffen von Soll- und Ist-Geschwindigkeit kann so nicht auftreten, wodurch die Geschwindigkeitsregelfunktion genauer und sanfter wirkt.

Gemäß einem weiteren Grundgedanken der Erfindung wird ein Verfahren zum Verändem der Ist-Geschwindigkeit eines Arbeitsfahrzeuges mit Stufenlosgetriebe und elektronischem Steuergerät mit Geschwindigkeitsregelfunktion geschaffen, das die folgenden Schritte aufweist:
a) eine erste Ist-Geschwindigkeit wird mittels eines Betätigungsorganes eingestellt, im Steuergerät laufend gespeichert und von der Geschwindigkeitsregelfunktion gehalten, solange keine Verstellung erfolgt, so daß die zuletzt eingestellte erste Ist-Geschwindigkeit gespeichert bleibt,
b) bei Betätigen eines Schalters wird die Geschwindigkeitsregelfunktion für die erste Ist-Geschwindigkeit außer Kraft gesetzt und sodann eine zweite Ist-Geschwindigkeit angesteuert.

Dieses Verfahren ist dadurch gekennzeichnet, daß die zweite Ist-Geschwindigkeit vorgegeben, insbesondere gleich Null ist, daß mittels des Betätigungsorganes die zweite Ist-Geschwindigkeit für die Manövrierfahrt verändert wird, wobei diese zweite Geschwindigkeit bis zu einem vorgegebenen Maximalwert ansteigt, solange das Betätigungsorgan aktiviert bleibt, daß durch Loslassen des Betätigungsorganes das Fahrzeug wieder stillgesetzt wird, und daß zur Rückkehr von dieser zweiten Ist-Geschwindigkeit zu der in der Geschwindigkeitsregelfunktion gespeicherten ersten Ist-Geschwindigkeit wieder ein Schalter betätigt wird.

Vorteilhafte Ausgestaltungen und Weiterbildungen ergeben sich aus den Unteransprüchen. Diese Verfahren sind weiter unten im Detail beschrieben. Sie gewährleisten durch Sinnfälligkeit und volle Nutzung der Möglichkeiten einer elektronischen Steuerung ein Höchstmaß an Bedienungskomfort und Sicherheit. Sie sind das Ergebnis ausführlicher Bewegungsstudien.

Ein besonders vorteilhaftes Verfahren zum Verändern der Geschwindigkeit beim Manövrieren unter Zuhilfenahme einseitiger Betätigung der Fußbremse (Lenkbremsen), und eines Vorwärts/Rückwärts-Wählhebels, ausgehend von Geschwindigkeitsregel-Fahrt mit der ersten Ist-Geschwindigkeit umfaßt die folgenden Schritte:
a) durch Betätigen des zweiten Schalters wird das Fahrzeug stillgesetzt,
b) mittels des Betätigungsorganes wird eine zweite Ist-Geschwindigkeit für die Manövrierfahrt eingestellt, wobei die Geschwindigkeit bis zu einem vorgegebenen Maximalwert ansteigt, solange das Betätigungsorgan aktiviert bleibt,
c) mit einseitig betätigter Fußbremse wird nun eine enge Kurve gefahren,
d) durch Loslassen des Betätigungsorganes wird das Fahrzeug wieder stillgesetzt,
e) der Vorwärts/Rückwärts-Wählhebel wird in Rückwärts-Stellung gebracht,
f) Schritte b) c) und d) werden bei Rückwärtsfahrt wiederholt, alles gegebenenfalls mehrmals,
g) durch Betätigen des zweiten Schalters wird wieder die Geschwindigkeitsregelfunktion für die erste gespeicherte Ist-Geschwindigkeit eingestellt.

Im Folgenden wird die Erfindung anhand von Abbildungen beschrieben und erläutert. Es stellen dar:
Figur 1: Schematisch einen Ackerschlepper und dessen Führerstand mit dem erfindungsgemäßen System,
Figur 2: eine spezielle Ausführungsform des erfindungsgemäßen Systems,
Figur 3: ein Ablaufschaubild des Verfahrens in einer ersten Betriebssituation,
Figur 4: ein Ablaufschaubild des Verfahrens in einer zweiten Betriebssituation,
Figur 5: ein Ablaufschaubild des Verfahrens in einer dritten Betriebssituation.

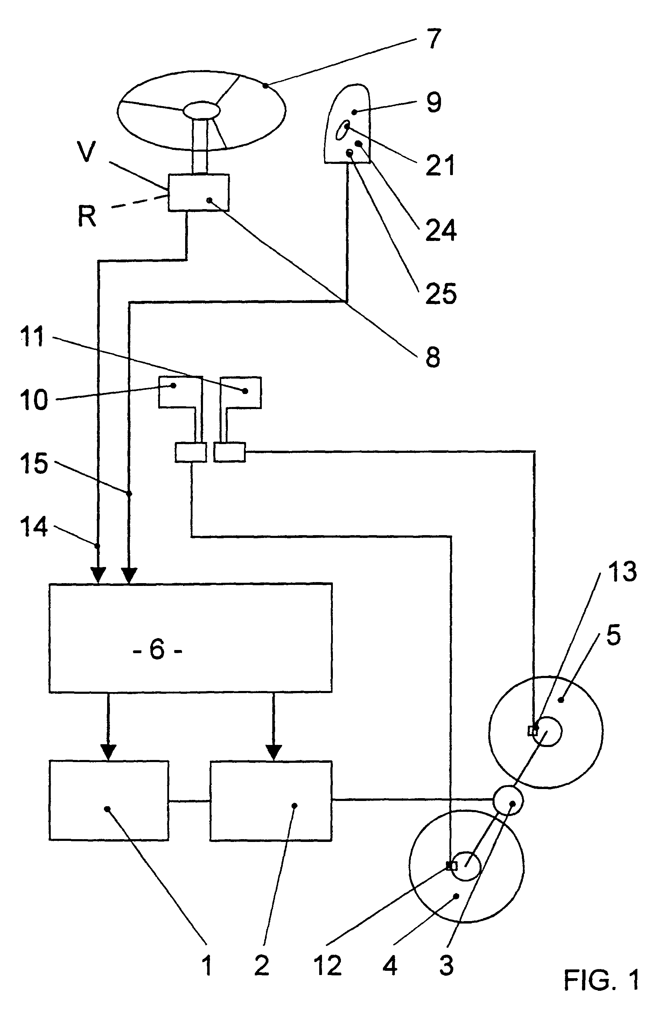

Figur 1 zeigt schematisch einen Ackerschlepper mit Führerstand. Der Antriebsstrang wird von einem Motor 1 mit nachgeschaltetem Stufenlosgetriebe 2 und einem Differential 3 gebildet, das das Antriebsmoment auf das linke und rechte Hinterrad 4, 5 verteilt. Motor 1 und Stufenlosgetriebe 2 werden von einem Steuergerät 6 gesteuert. Dabei kann es sich beispielsweise um ein Steuergerät handeln, das das in der EP-A1-0 967 107 beschriebenen Steuerverfahren ausführt.

In der Nähe des nur angedeuteten Lenkrades 7 ist ein Vorwärts/Rückwärts-Wählhebel 8 angebracht, vorzugsweise so, daß er mit der das Lenkrad 7 bedienenden Hand betätigt werden kann. In Reichweite der anderen Hand des Fahrers ist die erfindungsgemäße Betätigungsvorrichtung 9 angeordnet. Zum Bremsen sind die beiden Halbpedale 10, 11 vorgesehen, wovon das eine (10) auf die Bremse des linken Hinterrades 12 und das andere (11) auf die Bremse des rechten Hinterrades 13 wirkt. Im normalen Betrieb sind die beiden Halbpedale 10,11 gekoppelt. Um als Lenkbremse zu wirken, sind sie einzeln betätigbar, so daß jeweils das kurveninnere Hinterrad eingebremst wird. Die Steuerbefehle vom Vorwärts/Rückwärts-Wählhebel 8 und von der Betätigungsvorrichtung 9 werden über Leitungen 14, 15 dem Steuergerät 6 zugeführt. Das Steuergerät ist ein Mikrocomputer, der ein Steuerprogramm repetitiv abarbeitet, das unter anderem auch eine Geschwindigkeitsregelfunktion ausüben kann.

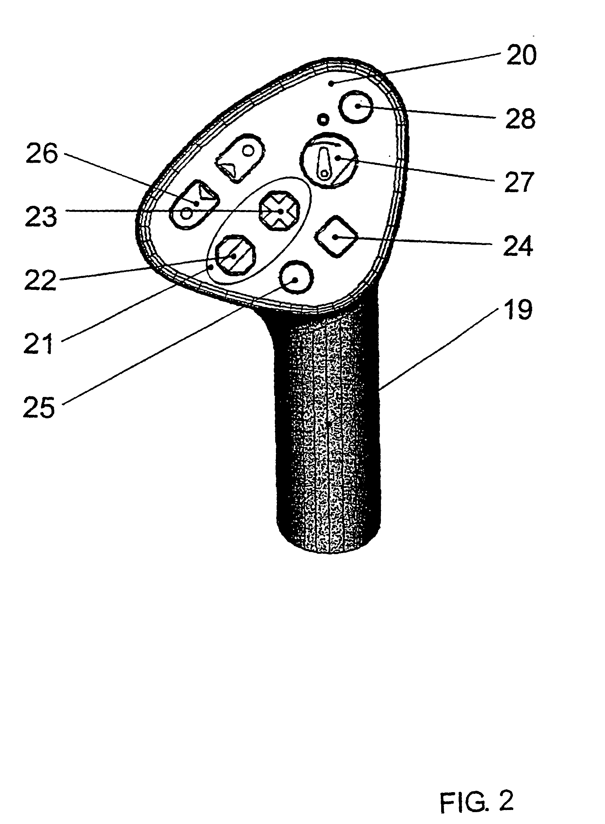

Figur 2 zeigt das erfindungsgemäße System in einer bevorzugten Ausführungsform. Irgendwo in Reichweite der zweite Bedienungshand des Fahrers (die erste ist am Lenkrad), etwa am Armaturenbrett oder, vorzugsweise, in Verlängerung der Armstütze ist ein mit Vorteil fester Handgriff 19 vorgesehen, den die Hand des Fahrers umfaßt. Am oberen Ende des Handgriffes, in Reichweite des nicht dargestellten Daumens, ist eine Bedienungsoberfläche 20. Auf der Bedienungsoberfläche 20 ist ein Betätigungsorgan 21 zum Einstellen der Ist-Geschwindigkeit vorgesehen, das vorzugsweise aus zwei Tastern 22, 23 besteht, wovon der erste deutlich mit einem Minus und der zweite mit einem Plus bezeichnet ist. Durch Drücken des ersten wird die Ist-Geschwindigkeit abgesenkt, solange dieser gedrückt bleibt. Durch Drücken des zweiten (23) wird sie während dessen Dauer angehoben. Ein erster Schalter 24 und ein zweiter Schalter 25 sind vorzugsweise als Drücker ausgebildet, die bei aufeinanderfolgendem Drücken abwechselnd die eine oder andere Schaltstellung einnehmen.

Die beiden Schaltstellungen des ersten Schalters 24 (er könnte mit "Schubbetrieb/Lenkbremse" beschriftet sein) entsprechen: die erste Stellung der Geschwindigkeitsregelfunktion für eine erste Ist-Geschwindigkeit, die mittels des Betätigungsorganes 21 verstellbar ist, in jedem Moment gespeichert wird und gespeichert bleibt; die zweite Stellung, in der die Geschwindigkeitsregelfunktion für die eingestellte erste Ist-Geschwindigkeit außer Kraft gesetzt ist, wobei diese erste Ist-Geschwindigkeit jedoch gespeichert bleibt, und eine zweite, wieder mittels des Betätigungsorganes 21 verstellbare Ist-Geschwindigkeit eingestellt wird. Diese kann ebenso wie die erste Ist-Geschwindigkeit gespeichert werden, so daß bei späterem Betätigen des ersten Schalters 24 wieder dieselbe zweite Ist-Geschwindigkeit eingestellt wird. Es kann vorgesehen sein, daß durch abermaliges Drücken des ersten Schalters 24 wieder die zur Geschwindigkeitsregelfunktion gespeicherte erste Ist-Geschwindigkeit eingestellt wird.

Ein zweiter Schalter 25 (er könnte mit "Geschwindigkeitsregler Ein/Aus") bezeichnet sein, bewirkt ein Umschalten von Geschwindigkeitsregler-Fahrt mit der ersten Ist-Geschwindigkeit auf eine fest eingestellte verminderte Geschwindigkeit (Geschwindigkeitsregler ausgeschaltet). Wenn diese gleich Null ist, ist dieser Schalter zum Stehenbleiben bzw. sogar als Notstop benutzbar. Es kann vorgesehen sein, daß nach Stillsetzen des Fahrzeuges mittels des Schalters 25 die zweite Ist-Geschwindigkeit in der Weise eingestellt wird, daß durch Drücken der Taste 23 des Betätigungsorganes 21 (Betätigen der Taste 22 wäre bei Stillstand sinnlos) die Geschwindigkeit nach einer vorgegebenen Funktion bis zu einer Maximalgeschwindigkeit ansteigt und bei Loslassen der Taste 23 wieder zum Stillstand kommt. Bei abermaligem Drücken dieses zweiten Schalters 25 wird wieder zu Geschwindigkeitsregler-Fahrt mit der gespeicherten ersten Ist-Geschwindigkeit zurückgekehrt. Es kommt der Bedienungssicherheit zugute, wenn auch nach Außerkraftsetzen der Geschwindigkeitsregelfunktion mittels des ersten Schalters 24, durch Betätigen des Schalters 25 wieder zur Geschwindigkeitsregelfunktion mit der ersten Ist-Geschwindigkeit zurückgestellt wird. Das ist etwa auch durch Kopplung der beiden Schalter 24, 25 erreichbar.

Weiterhin befinden sich auf der Bedienungsoberfläche 20 noch Bedienungsorgane, die mit der Erfindung nichts zu tun haben: Schalter 26, 27 für verschiedene Hubwerks- bzw. Hilfsfunktionen und Kontroll- bzw. Warnlichter, etwa 28.

Mit den beschriebenen Steuerelementen und dem damit verbundenen Steuerverfahren lassen sich schwierige Fahrmanöver und Fahrsituationen einfach und sicher beherrschen. Anhand der folgenden drei Ablaufschernen werden solche durchgespielt und erläutert.

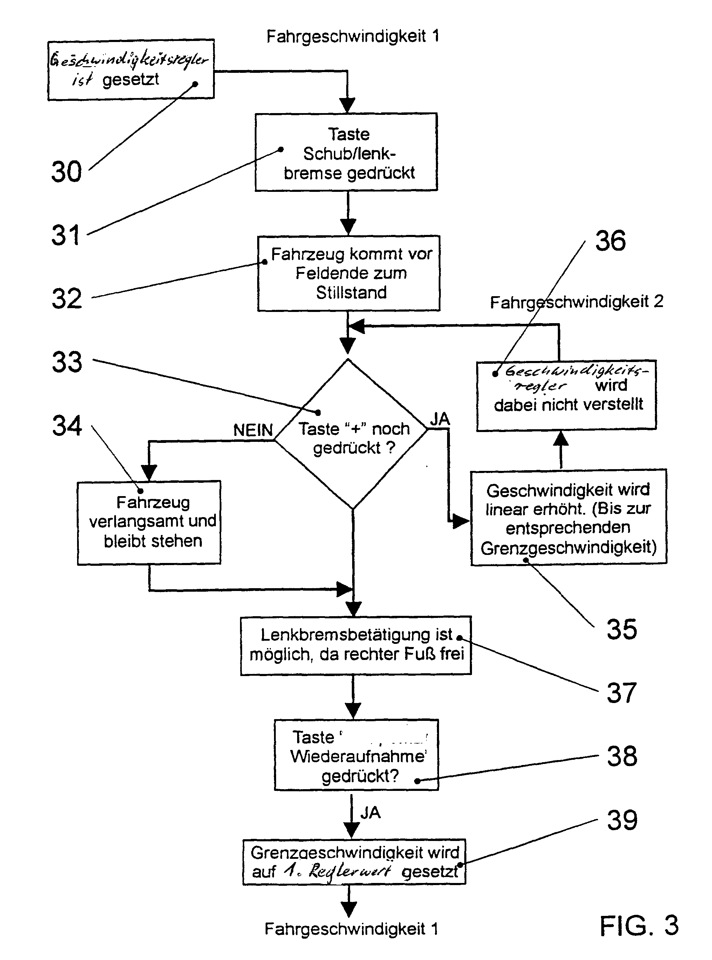

Figur 3 (Variante 1) entspricht einer ersten Fahrsituation: das Wenden am Feldrain, beispielsweise beim Pflügen, unter Zuhilfenahme der Lenkbremse. Während des Pflügens ist der Geschwindigkeitsregler gesetzt (Feld 30) und das Fahrzeug fährt mit konstanter erster Geschwindigkeit. Bei Annäherung an den Rain wird der erste Schalter 24 gedrückt (Feld 31), das Fahrzeug kommt vor dem Rain zum Stillstand (32). Die erste Geschwindigkeit bleibt aber für die Geschwindigkeitsregelfunktion gespeichert. Beim langsamen Wenden wird nun die Geschwindigkeit aus dem Stillstand mit dem Betätigungsorgan 21 gesteuert, dazu wird immer wieder abgefragt, ob der Taster 23 des Betätigungsorganes 21 noch gedrückt ist (Feld 33). Solange er gedrückt ist (Feld 35), wird die zweite Ist-Geschwindigkeit linear, bis zu einer vorgegebenen (relativ niederen) Maximalgeschwindigkeit erhöht und diese Maximalgeschwindigkeit gehalten, solange der Taster gedrückt bleibt. Dabei wird die in der Geschwindigkeitsregelfunktion gespeicherte erste Geschwindigkeit nicht verstellt (36). Sobald der Taster 23 nicht mehr gedrückt wird ("Nein" in 33) so bleibt das Fahrzeug wieder stehen (34). Während der Langsamfahrt ist die Lenkbremsbetätigung möglich, da der rechte Fuß frei ist. Die Geschwindigkeitsverstellung erfolgt ja mit dem Betätigungsorgan 21 manuell.

Falls zum Wenden auch reversiert werden muß, kann nun mit dem Vorwärts/Rückwärts-Wählhebel 8 auf rückwärts geschaltet und bei Rückwärtsfahrt wieder nach den Feldern 33 bis 37 verfahren werden. Ist das Fahrzeug gewendet und in der richtigen Position, um wieder in die Furche einzufahren, wo wird der zweite Schalter 25 gedrückt. Dadurch übemimmt die Geschwindigkeitsregelfunktion wieder (Feld 38). Das Fahrzeug fährt wieder an und mit der gespeicherten ersten Geschwindigkeit weiter (Feld 39).

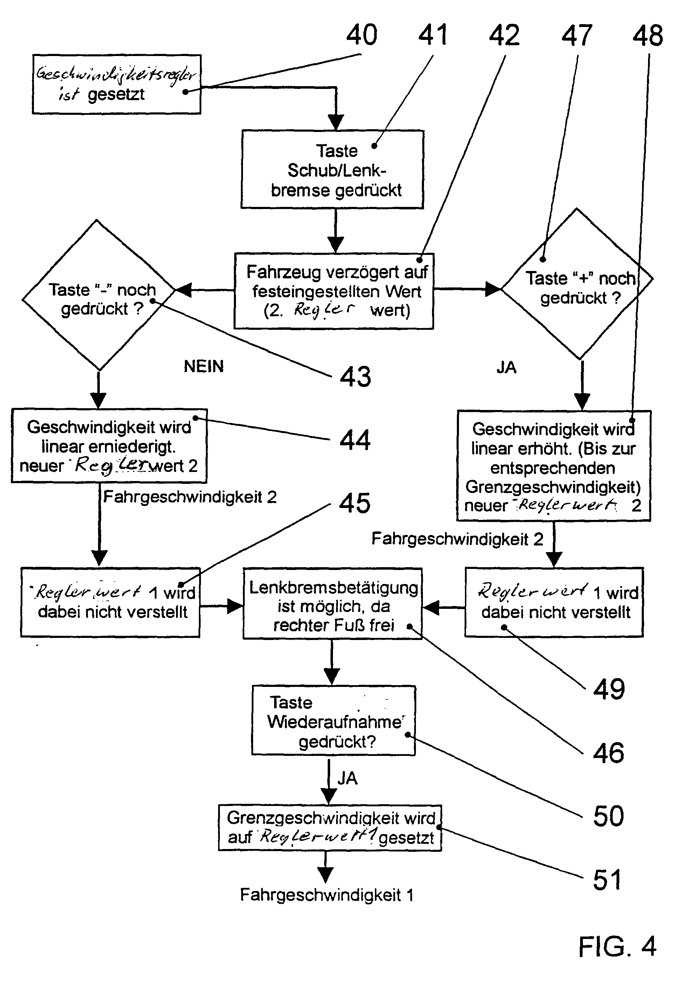

In einer zweiten Variante wird beim Manövrieren gemäß Figur 4 verfahren. Ausgegangen wird wieder von der Fahrt mit gesetztem Geschwindigkeitsregler (Feld 40) mit konstanter erster Geschwindigkeit. Durch Betätigen des Schalters 24 (Feld 41) wird die Geschwindigkeit auf eine fest eingestellte zweite Geschwindigkeit verzögert (42). Diese zweite Geschwindigkeit kann nun durch Drücken einer der beiden Tasten 22 oder 23 (Feld 43 oder 47) gesenkt oder angehoben werden (Feld 44 oder 48). Die so eingestellte zweite Geschwindigkeit wird als zweiter Geschwindigkeitsregler-Wert gespeichert, ohne daß der erste Geschwindigkeitsregler-Wert entsprechend der ersten Geschwindigkeit verstellt wird (Feld 45 oder 49). Während der Fahrt mit der zweiten Fahrgeschwindigkeit ist der rechte Fuß frei, kann somit wenn nötig, zur Betätigung der Lenkbremse verwendet werden (Feld 46). Ist das Manöver beendet, so wird durch Drücken des zweiten Schalters 25 (Feld 50) wieder auf den ersten Geschwindigkeitsregler-Wert und damit auf die erste Geschwindigkeit des Fahrzeuges übergegangen (Feld 51). Der zweite Geschwindigkeitsregler-Wert für die zweite Geschwindigkeit bleibt im Hintergrund aber auch gespeichert, so daß er beim nächsten Manöver automatisch wieder angesteuert wird (Feld 42).

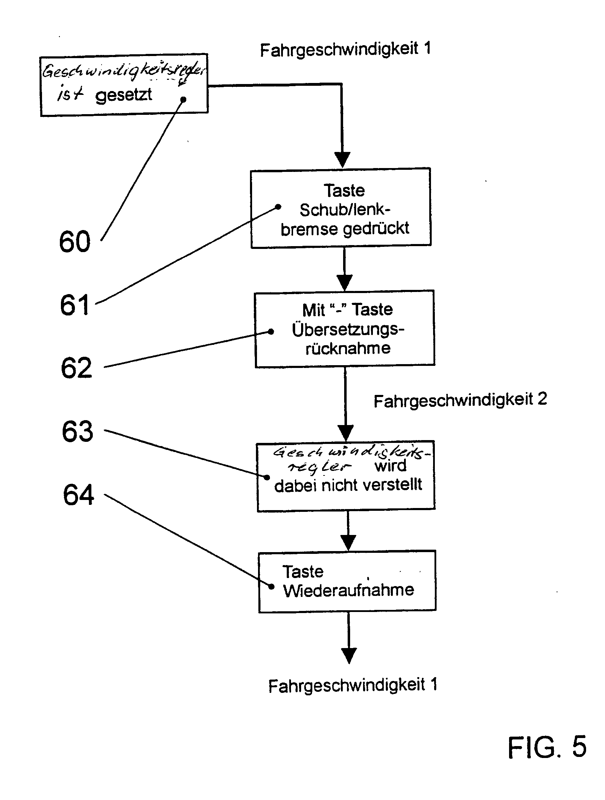

Nach Figur 5 kann das erfindungsgemäße Verfahren auch im Schubbetrieb eingesetzt werden, wobei Fahrsicherheit und Bedienungskomfort wesentlich verbessert sind. Bei Schubbetrieb, d. h. Bergabfahrt mit bremsendem Motor und schwerer Last, besteht die Gefahr, daß das Fahrzeug trotz der Geschwindigkeitsregelfunktion die vom Geschwindigkeitsregler gesteuerte erste Geschwindigkeit nicht halten kann und unter dem Schub der Anhängelast immer schneller wird. Bei Bergab-Geschwindigkeitsregler-Fahrt mit einem Stufenlosgetriebe wird normalerweise entweder bei steigender Fahrgeschwindigkeit die Motordrehzahl sinken, oder die Motordrehzahl erhöht werden, um die Bremswirkung zu erhöhen, das aber geht nur bis zur Höchstdrehzahl des Motors. In beiden Fällen muß man bei starkem Gefälle bzw. Lastschub letzten Endes Bremsen, wodurch die Geschwindigkeitsregelfunktion jedenfalls außer Kraft gesetzt wird.

Wird bei Geschwindigkeitsregler-Betrieb (60) beim Bergabfahren ein Ansteigen der Geschwindigkeit festgestellt, so wird - solange der Motor noch nicht seine Höchstdrehzahl erreicht hat - durch Betätigen des ersten Schalters 24 die Geschwindigkeitsregelfunktion der ersten Ist-Geschwindigkeit außer Kraft gesetzt (Feld 61) und durch Betätigen des Tasters 22 des Betätigungsorganes 21 die Untersetzung vergrößert (Feld 62), was die Bremswirkung des Motors erhöht. Dabei wird wieder der Geschwindigkeitsregler-Wert entsprechend der ersten Ist-Geschwindigkeit nicht verstellt (Feld 63). Ist die Gefällestrecke überwunden, so wird durch Drücken des Schalters 25 wieder der Geschwindigkeitsregler eingesetzt und mit der ersten Geschwindigkeit weitergefahren.

Die beschriebenen Fahrsituationen sind nur Beispiele, viele andere Situationen sind denkbar, bei denen das erfindungsgemäße Verfahren in derselben Weise mit Vorteil einsetzbar ist, zum Beispiel der Betrieb mit Frontlader oder Planierschaufel. Auch diese Arbeiten können in der beschriebenen Weise besonders komfortabel, schnell und sicher ausgeführt werden.

## Patentansprüche

1. System zum Verändern der Ist-Geschwindigkeit eines Arbeitsfahrzeuges mit Stufenlosgetriebe (2) und elektronischem Steuergerät (6) mit Geschwindigkeitsregelfunktion, bestehend aus folgenden Bedienungselementen:
a) einem Betätigungsorgan (21) zur Verstellung der Ist-Geschwindigkeit des Fahrzeuges, die als erste Ist-Geschwindigkeit laufend gespeichert und von der Geschwindigkeitsregelfunktion gehalten wird, wenn keine Verstellung erfolgt,
b) mindestens einem Schalter (24;25) zur Außerkraftsetzung und Wiedereinsetzung der Geschwindigkeitsregelfunktion, wobei bei Außerkraftsetzung die eingestellte erste Ist-Geschwindigkeit gespeichert bleibt und bei Wiedereinsetzung wieder eingestellt wird,
**dadurch gekennzeichnet, daß** ein weiterer Schalter (25) vorgesehen ist, durch dessen Betätigung eine Geschwindigkeit, insbesondere Null entsprechend Stillstand des Fahrzeuges, eingestellt wird, worauf mittels des Betätigungsorganes (21) eine zweite Ist-Geschwindigkeit für die Manövrierfahrt eingestellt wird, die bis zu einem vorgegebenen Maximalwert ansteigt, solange das Betätigungsorgan (21) aktiviert bleibt, und daß durch erneutes Betätigen des weiteren Schalters (25) die Geschwindigkeitsregelfunktion für die erste Ist-Geschwindigkeit wieder eingesetzt wird.

2. System nach Anspruch 1, **dadurch gekennzeichnet, daß** ein Schalter (24) vorgesehen ist, nach dessen Betätigung die zweite Ist-Geschwindigkeit mittels des Betätigungsorganes (21) eingestellt und gespeichert werden kann, und daß durch erneutes Betätigen des Schalters (24) die Geschwindigkeitsregelfunktion für die erste Ist-Geschwindigkeit wieder eingesetzt wird, wobei die zuletzt eingestellte zweite Ist-Geschwindigkeit gespeichert wird.

3. System nach Anspruch 1 oder 2, **dadurch gekennzeichnet, daß** das Betätigungsorgan (21) und der eine Schalter (24) und/oder der weitere Schalter (25) auf einer Bedienungsoberfläche (20) in Reichweite mindestens eines Fingers des Fahrers angebracht ist.

4. System nach Anspruch 3, **dadurch gekennzeichnet, daß** die Bedienungsoberfläche (20) auf einem festen Handgriff (19) in Reichweite des Daumens der den Handgriff haltenden Hand angebracht ist.

5. System nach einem der Ansprüche 1 bis 4, **dadurch gekennzeichnet, daß** das Betätigungsorgan (21) aus zwei Tastern (22,23) besteht, einer (23) zum Erhöhen und einer (22) zum Vermindern der Ist-Geschwindigkeit.

6. Verfahren zum Verändern der Ist-Geschwindigkeit eines Arbeitsfahrzeuges mit Stufenlosgetriebe (2) und elektronischem Steuergerät (6) mit Geschwindigkeitsregelfunktion, in folgenden Schritten:
a) eine erste Ist-Geschwindigkeit wird mittels eines Betätigungsorganes (21) eingestellt, im Steuergerät (6) laufend gespeichert und von der Geschwindigkeitsregelfunktion gehalten, solange keine Verstellung erfolgt, so daß die zuletzt eingestellte erste Ist-Geschwindigkeit gespeichert bleibt,
b) bei Betätigen eines Schalters (24;25) wird die Geschwindigkeitsregelfunktion für die erste Ist-Geschwindigkeit außer Kraft gesetzt und sodann eine zweite Ist-Geschwindigkeit angesteuert,
**dadurch gekennzeichnet, daß** die zweite Ist-Geschwindigkeit vorgegeben, insbesondere gleich Null ist, daß mittels des Betätigungsorganes (21) die zweite Ist-Geschwindigkeit für die Manövrierfahrt verändert wird, wobei diese zweite Geschwindigkeit bis zu einem vorgegebenen Maximalwert ansteigt, solange das Betätigungsorgan (21) aktiviert bleibt, daß durch Loslassen des Betätigungsorganes (21) das Fahrzeug wieder stillgesetzt wird, und daß zur Rückkehr von dieser zweiten Ist-Geschwindigkeit zu der in der Geschwindigkeitsregelfunktion gespeicherten ersten Ist-Geschwindigkeit wieder ein Schalter (24;25) betätigt wird.

7. Verfahren zum Verändern der Ist-Geschwindigkeit nach Anspruch 6, **dadurch gekennzeichnet, daß** die zweite Ist-Geschwindigkeit mittels desselben Betätigungsorganes (21) verstellbar ist, wie die erste Ist-Geschwindigkeit.

8. Verfahren zum Verändern der Ist-Geschwindigkeit nach Anspruch 6, **dadurch gekennzeichnet, daß** die zweite Ist-Geschwindigkeit noch von der vorhergehenden Außerkraftsetzung der Geschwindigkeitsregelfunktion gespeichert ist.

9. Verfahren zum Verändern der Ist-Geschwindigkeit nach Anspruch 6, **dadurch gekennzeichnet, daß** nach Betätigen eines ersten Schalters (24) die zweite Ist-Geschwindigkeit mittels des Betätigungsorganes (21) eingestellt und durch Betätigen eines zweiten Schalters (25) das Fahrzeug stillgesetzt wird.

10. Verfahren zum Verändern der Ist-Geschwindigkeit nach Anspruch 9, **dadurch gekennzeichnet, daß** in der Folge durch Betätigen des zweiten Schalters (25) wieder die gespeicherte erste Ist-Geschwindigkeit aktiviert und die zweite Ist-Geschwindigkeit gespeichert wird.

11. Verfahren zum Verändern der Geschwindigkeit nach Anspruch 6, beim Manövrieren unter Zuhilfenahme einseitiger Betätigung der Fußbremse (10,11,12,13) ("Lenkbremsen") und eines Vorwärts/Rückwärts-Wählhebels (8) ausgehend von einer Geschwindigkeitsregel-Fahrt mit der ersten Ist-Geschwindigkeit in folgenden Schritten:
a) durch Betätigen des zweiten Schalters (25) wird das Fahrzeug stillgesetzt,
b) mittels des Betätigungsorganes (21) wird eine zweite Ist-Geschwindigkeit für die Manövrierfahrt eingestellt, wobei die Geschwindigkeit bis zu einem vorgegebenen Maximalwert ansteigt, solange das Betätigungsorgan (21) aktiviert bleibt,
c) mit einseitig betätigter Fußbremse (10,11,12,13) wird nun eine enge Kurve gefahren,
d) durch Loslassen des Betätigungsorganes (21) wird das Fahrzeug wieder stillgesetzt,
e) der Vorwärts/Rückwärts-Wählhebel (8) wird in Rückwärts-Stellung gebracht,
f) Schritte b) c) und d) werden bei Rückwärtsfahrt wiederholt, alles gegebenenfalls mehrmals,
g) durch Betätigen des zweiten Schalters (25) wird wieder die Geschwindigkeitsregelfunktion für die erste gespeicherte Ist-Geschwindigkeit eingestellt.

12. Verfahren zum Verändern der Ist-Geschwindigkeit nach Anspruch 8 beim Manövrieren, bestehend in folgenden Schritten (Variante 2):
a) durch Betätigen des ersten Schalters (24) wird von der ersten Ist-Geschwindigkeit auf eine zweite Ist-Geschwindigkeit übergegangen,
b) die zweite Ist-Geschwindigkeit wird wenn nötig, mittels der Betätigungseinrichtung (21) verstellt und gespeichert,
c) durch Betätigen des zweiten Schalters (25) wird wieder die Geschwindigkeitsregelfunktion für die erste gespeicherte Ist-Geschwindigkeit aktiviert.

## Claims

1. A system for varying the actual speed of a working vehicle with an infinitely variable transmission (2) and an electronic control device (6) with a speed regulating function, comprising the following operating elements:
a) an actuating member (21) for adjusting the actual speed of the vehicle which is continuously stored as a first actual speed and maintained by the speed regulating function if no adjustment is effected, and
b) at least one switch (24; 25) for disabling and re-enabling the speed control function, wherein upon disablement the set first actual speed remains stored and is re-set upon re-enablement,
**characterised in that** there is provided a further switch (25), by the actuation of which a speed and in particular zero corresponding to the stopped condition of the vehicle is set, whereupon by means of the actuating member (21) there is set a second actual speed for manoeuvring travel, which rises to a predetermined maximum value as long as the actuating member (21) remains activated, and that the speed regulating function is re-enabled for the first actual speed by renewed actuation of the further switch (25).

2. A system according to claim 1 **characterised in that** there is provided a switch (24), after the actuation of which the second actual speed can be set by means of the actuating member (21) and stored and that by renewed actuation of the switch (24) the speed regulating function is re-enabled for the first actual speed, the last-set second actual speed being stored.

3. A system according to claim 1 or claim 2 **characterised in that** the actuating member (21) and the one switch (24) and/or the further switch (25) is disposed on an operating surface (20) within the reach of at least one finger of the driver.

4. A system according to claim 3 **characterised in that** the operating surface (20) is disposed on a fixed handle (19) within the reach of the thumb of the hand holding the handle.

5. A system according to one of claims 1 to 4 **characterised in that** the actuating member (21) comprises two pushbuttons (22, 23), one (23) for increasing the actual speed and one (22) for reducing the actual speed.

6. A method of varying the actual speed of a working vehicle with an infinitely variable transmission (2) and an electronic control device (6) with a speed regulating function, in the following steps:
a) a first actual speed is set by means of an actuating member (21), continuously stored in the control device (6) and maintained by the speed regulating function as long as no adjustment is effected so that the last-set first actual speed remains stored, and
b) upon actuation of a switch (24; 25) the speed regulating function is disabled for the first actual speed and then a second actual speed is implemented,
**characterised in that** the second actual speed is predetermined and in particular is equal to zero, that the second actual speed is altered for manoeuvring travel by means of the actuating member (21), wherein said second speed rises to a predetermined maximum value as long as the actuating member (21) remains activated, that the vehicle is stopped again by releasing the actuating member (21) and that a switch (24; 25) is actuated again to return from said second actual speed to the first actual speed stored in the speed regulating function.

7. A method of varying the actual speed according to claim 6 **characterised in that** the second actual speed is adjustable by means of the same actuating member (21) as the first actual speed.

8. A method of varying the actual speed according to claim 6 **characterised in that** the second actual speed is still stored by the preceding disablement of the speed regulating function.

9. A method of varying the actual speed according to claim 6 **characterised in that** after actuation of a first switch (24) the second actual speed is set by means of the actuating member (21) and the vehicle is stopped by actuation of a second switch (25).

10. A method of varying the actual speed according to claim 9 **characterised in that** subsequently by actuation of the second switch (25) the stored first actual speed is activated again and the second actual speed is stored.

11. A method of varying the speed according to claim 6 upon manoeuvring by means of single-sided actuation of the foot brake (10, 11, 12, 13) ('steering braking') and a forward/reverse selector lever (8) starting from a speed regulating travel at the first actual speed in the following steps:
a) the vehicle is stopped by actuation of the second switch (25),
b) a second actual speed for the manoeuvring travel is set by means of the actuating member (21), wherein the speed rises to a predetermined maximum value as long as the actuating member (21) remains activated,
c) now a tight curve is negotiated with the foot brake (10, 11, 12, 13) actuated at one side,
d) the vehicle is stopped again by releasing the actuating member (21),
e) the forward/reverse selector lever (8) is put into the reverse position,
f) steps b), c) and d) are repeated in reverse travel, all possibly a plurality of times, and
g) by actuation of the second switch (25) the speed regulating function is set again for the first stored actual speed.

12. A method of varying the actual speed according to claim 8 when manoeuvring consisting of the following steps (variant 2):
a) by actuation of the first switch (24) the change is made from the first actual speed to a second actual speed,
b) the second actual speed is adjusted if necessary by means of the actuating device (21) and stored, and
c) by actuation of the second switch (25) the speed regulating function is activated again for the first stored actual speed.

## Revendications

1. Système pour modifier la vitesse effective d'un véhicule de travail comprenant une transmission à réglage en continu (2) et un appareil de commande électronique (6) ayant une fonction de réglage de la vitesse, constitué par les éléments de maniement ci-après :
a) un organe d'actionnement (21) pour régler la vitesse effective du véhicule qui est mémorisée en continu à titre de première vitesse effective et qui est maintenue par la fonction de réglage de la vitesse, tant que l'on se trouve en l'absence d'une mise au point,
b) au moins un commutateur (24 ; 25) pour la mise hors circuit et la remise en circuit de la fonction de réglage de la vitesse, la première vitesse effective réglée étant mémorisée lors de la mise hors circuit et étant à nouveau réglée lors de la remise en circuit,
**caractérisé en ce qu'**on prévoit un commutateur supplémentaire (25) par l'actionnement duquel on règle une vitesse, en particulier une vitesse nulle correspondant à l'arrêt du véhicule, à laquelle vient s'ajouter, à l'aide de l'organe d'actionnement (21) une deuxième vitesse effective pour la marche de manoeuvre, qui s'élève jusqu'à une valeur maximale prédéfinie tant que l'organe d'actionnement (21) reste activé, et **en ce que**, par l'actionnement renouvelé du deuxième commutateur (25), la fonction de réglage de la vitesse pour la première vitesse effective est remise en oeuvre.

2. Système selon la revendication 1, **caractérisé en ce qu'**on prévoit un commutateur (24) par l'actionnement duquel on peut régler et mémoriser la deuxième vitesse effective à l'aide de l'organe d'actionnement (21), et **en ce que**, via l'actionnement renouvelé du commutateur (24), on remet en oeuvre la fonction de réglage de la vitesse pour la deuxième vitesse effective, la deuxième vitesse effective qui a été réglée en dernier lieu étant mémorisée.

3. Système selon la revendication 1 ou 2, **caractérisé en ce que** l'organe d'actionnement (21) et le premier commutateur (24) et/ou le deuxième commutateur (25) sont appliqués sur une surface de maniement (20) dans le rayon d'action d'au moins un doigt du conducteur.

4. Système selon la revendication 3, **caractérisé en ce que** la surface de maniement (20) est appliquée sur une poignée inamovible (19) dans le rayon d'action du pouce de la main tenant la poignée.

5. Système selon l'une quelconque des revendications 1 à 4, **caractérisé en ce que** l'organe d'actionnement (21) est constitué par deux touches (22, 23), une touche (23) pour augmenter la vitesse effective et une touche (22) pour la diminuer.

6. Procédé pour modifier la vitesse effective d'un véhicule de travail comprenant une transmission à réglage en continu (2) et un appareil de commande électronique (6) ayant une fonction de réglage de la vitesse, en passant par les étapes consistant à :
a) à l'aide d'un organe d'actionnement (21), régler une première vitesse effective, la mémoriser en continu dans un appareil de commande (6) et la maintenir via la fonction de réglage de la vitesse, tant que l'on se trouve en l'absence d'une mise au point, de telle sorte que la première vitesse effective réglée en dernier lieu est mémorisée,
b) lors de l'actionnement d'un commutateur (24 ; 25), mettre hors circuit la fonction de réglage de la vitesse pour la première vitesse effective de façon à amorcer une deuxième vitesse effective,
**caractérisé en ce que** la deuxième vitesse effective est prédéfinie, en particulier correspond à une vitesse nulle ; **en ce que**, à l'aide de l'organe d'actionnement (21), la deuxième vitesse effective est modifiée pour la marche de manoeuvre, cette deuxième vitesse augmentant jusqu'à une valeur maximale prédéfinie tant que l'organe d'actionnement (21) reste activé ; **en ce que** le véhicule s'arrête à nouveau en relâchant l'organe d'actionnement (21) ; et **en ce qu'**on actionne à nouveau un commutateur (24 ; 25) pour repasser de cette deuxième vitesse effective à la première vitesse effective mémorisée dans la fonction de réglage de la vitesse.

7. Procédé pour modifier la vitesse effective selon la revendication 6, **caractérisé en ce que** la deuxième vitesse effective peut être réglée à l'aide du même organe d'actionnement (21) que celui de la première vitesse effective.

8. Procédé pour modifier la vitesse effective selon la revendication 6, **caractérisé en ce que** la deuxième vitesse effective est encore mémorisée par la mise hors circuit précédente de la fonction de réglage de la vitesse.

9. Procédé pour modifier la vitesse effective selon la revendication 6, **caractérisé en ce que**, après l'actionnement d'un premier commutateur (24), on règle la deuxième vitesse effective à l'aide de l'organe d'actionnement (21) et par l'actionnement d'un deuxième commutateur (25), on met le véhicule à l'arrêt.

10. Procédé pour modifier la vitesse effective selon la revendication 9, **caractérisé en ce que**, par la suite, via l'actionnement du deuxième commutateur (25), on active à nouveau la première vitesse effective mémorisée et on mémorise la deuxième vitesse effective.

11. Procédé pour modifier la vitesse selon la revendication 6, lors d'une manoeuvre à l'aide d'un actionnement unilatéral de la pédale de frein (10, 11, 12, 13) ("frein de direction") et d'un levier de sélection marche avant/marche arrière (8), à partir d'une marche basée sur de réglage de la vitesse, réglée à la première vitesse effective, en passant par les étapes ci-après :
a) par l'actionnement du deuxième commutateur (25), on met le véhicule à l'arrêt ;
b) via l'organe d'actionnement (21), on règle une deuxième vitesse effective pour la marche de manoeuvre, la vitesse augmentant jusqu'à une valeur maximale prédéfinie tant que l'organe d'actionnement (21) reste activé ;
c) avec l'actionnement unilatéral de la pédale de frein (10, 11, 12, 13), on négocie un virage serré ;
d) en relâchant l'organe actionnement (21), on met à nouveau le véhicule à l'arrêt ;
e) on amène le levier de sélection marche avant/marche arrière (8) dans la position de marche arrière ;
f) on répète les étapes b), c) et d) lors de la marche arrière, en répétant toutes ces étapes le cas échéant plusieurs fois ;
g) en actionnant le deuxième commutateur (25), on règle à nouveau la fonction de réglage de la vitesse pour la première vitesse effective mémorisée.

12. Procédé pour modifier la vitesse effective selon la revendication 8, lors d'une manoeuvre, constitué par les étapes ci-après (variante 2) :
a) en actionnement le premier commutateur (24), on passe de la première vitesse effective à une deuxième vitesse effective ;
b) en cas de nécessité, la deuxième vitesse effective est mise au point et modifiée à l'aide du mécanisme d'actionnement (21) ;
c) en actionnant le deuxième commutateur (25), on active à nouveau la fonction de réglage de la vitesse pour la première vitesse effective mémorisée.
